# EUROPEAN PATENT APPLICATION

(11) **EP 1 878 988 A2**
(43) Date of publication of application: **16.01.2008**
(21) Application number: 06126821.5
(22) Date of filing: 21.12.2006
(51) Int. Cl.: F27B 9/00, H01J 9/26, H01J 9/48

(54) **Heating treatment method and apparatus**

(30) Priority: 12.07.2006 JP 2006191717
(71) Applicant: Fujitsu Hitachi Plasma Display Limited, Kunitomi-cho, 880-1194 Miyazaki Higashimorokata-gun (JP)
(72) Inventor: Fujio, Shunsuke c/o FUJITSU HITACHI PLASMA, Higashimorokata-gun, Miyazaki 880-1194 (JP); Fujinaga, Akihiro c/o FUJITSU HITACHI PLASMA, Higashimorokata-gun, Miyazaki 880-1194 (JP); Kanae, Tatsutoshi c/o FUJITSU HITACHI PLASMA, Higashimorokata-gun, Miyazaki 880-1194 (JP); Ishizuka, Kazunori c/o FUJITSU HITACHI PLASMA, Higashimorokata-gun, Miyazaki 880-1194 (JP); Ohyane, Hiroshi c/o FUJITSU HITACHI PLASMA, Higashimorokata-gun, Miyazaki 880-1194 (JP); Yanagibashi, Yasuo c/o FUJITSU HITACHI PLASMA, Higashimorokata-gun, Miyazaki 880-1194 (JP)
(74) Representative: Wilding, Frances Ward

(57) **Abstract**

A heating treatment method includes the steps of: preparing an array of heating chambers (R1-R6), the heating chambers being respectively provided with heaters and connected in series; transporting an object (2) to be heating from an upstream side toward a downstream side of the array to allow the object to pass through the heating chambers; supplying and discharging a warm air flow to and from each heating chamber, and controlling an amount of each discharged warm air flow to generate an air flow travelling along a direction in which the object is raised in temperature.

## Description

### BACKGROUND OF THE INVENTION

### 1. Field of the Invention

The present invention relates to a heating (thermal) treatment method and an apparatus for use in such a method, and more particularly relates to a heating treatment method and apparatus applied to a manufacturing process of a plasma display panel (hereinafter, referred to as PDP).

### 2. Description of the Related Art

A conventional PDP is manufactured by the steps of; making a front substrate by forming display electrodes on a glass substrate and laminating a dielectric layer and a protective layer over these display electrodes; making a back substrate by forming address electrodes on another glass substrate and forming a dielectric layer, partition walls and a phosphor layer on these address electrodes; and bonding these front substrate and back substrate to each other in a manner so as to allow the display electrodes and the address electrodes to intersect with each other. Here, in each of the processes in which the display electrodes and the address electrodes, the dielectric layer, the partition walls as well as the phosphor layer are formed, after a paste layer has been formed on a substrate, this paste layer is heated so as to be dried and calcined (for example, see Japanese Patent Application Laid-Open No. HEI 11(1999)-25854).

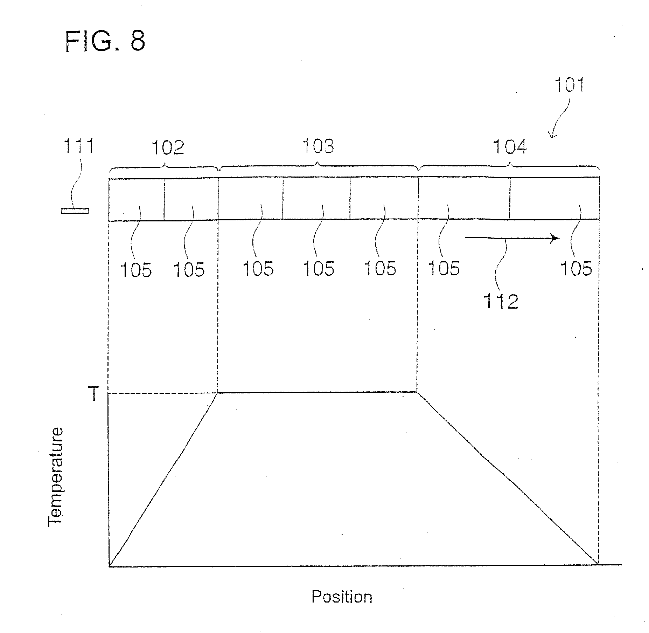

Fig. 8 is a schematic drawing that shows a conventional heating furnace 101 of a continuous type, and corresponds to a chart indicating a distribution of the furnace temperature in which positions in this heating furnace are plotted on the axis of abscissas, with substrate temperatures plotted on the axis of ordinates.

As shown in Fig. 8, the conventional heating furnace 101 is constituted by a temperature-raising unit 102, a temperature-retaining unit 103 and a temperature-lowering unit 104, and the respective units includes furnace chambers 105. In the heating furnace 101, a substrate (glass substrate) 111, used as an object to be heated, is moved in a direction of arrow 112, and allowed to pass through the temperature-raising unit 102, the temperature-retaining unit 103 and the temperature-lowering unit 104. The temperature-raising unit 102 is a unit for raising the temperature of the substrate 111 from room temperature to a temperature T, the temperature-retaining unit 103 is a unit for retaining the substrate 111 at the temperature T, and the temperature-lowering unit 104 is a unit for cooling the substrate 111 from the temperature T to the room temperature.

Here, in the case when a paste-state partition-wall (rib) forming material layer, applied onto a substrate surface with an even thickness, is dried in a drying furnace, it becomes difficult to dry the substrate evenly when the substrate has a large size, and drying irregularities are generated. Consequently, upon forming partition walls (ribs) through a sandblasting process, the drying irregularities become conspicuous as deviations in the width of the partition wall (rib), resulting in a problem of a reduction in the yield of the manufacturing process of a PDP.

### SUMMARY OF THE INVENTION

The present invention provides heating treatment method comprising the steps of: preparing an array of heating chambers, the heating chambers being respectively provided with heaters and connected in series; transporting an object to be heated from an upstream side toward a downstream side of the array to allow the object to pass through the heating chambers; supplying and discharging a warm air flow to and from each heating chamber, and controlling an amount of each supplied warm air flow and an amount of each discharged warm air flow to generate an air flow traveling along a direction in which the object is raised in temperature.

In another aspect, the present invention provides a heating treatment apparatus comprising: an array of heating chambers, the heating chambers being respectively provided with heaters and connected in series; and a transporting unit that transports an object to be heated from an upstream side toward an downstream side of the array to allow the object to pass through the heating chambers; each heating chamber including: an air supplying unit supplying a warm air flow thereto; and an air discharging unit discharging the warm air flow therefrom, wherein an amount of each supplied warm air flow and an amount of each discharged warm air flow are controlled such that an air flow is generated along a direction in which the object is raised in temperature.

In accordance with the present invention, the warm air flow is generated from the heating chamber on the uppermost stream side to the heating chamber on the lowermost stream side, and the temperature distribution of the object heated by the heater is homogenized by a function of thermal energy and kinetic energy of the warm air flow so that, when this method is applied to a drying process for a paste layer, for example, it becomes possible to prevent generation of drying irregularities.

### BRIEF DESCRIPTION OF THE DRAWINGS

Fig. 1 is an exploded perspective view that shows an essential portion of a PDP to which the present invention is applied;
Fig. 2 is an explanatory drawing that shows a partition-wall forming process of the PDP;
Fig. 3 is a structural drawing of a heating treatment apparatus of the present invention;
Fig. 4 is an enlarged view showing an essential portion of Fig. 3;
Fig. 5 is an explanatory drawing that shows a state in which a warm air flow is introduced into the apparatus shown in Fig. 3;
Fig. 6 is an explanatory drawing that shows an air flow that is generated in the apparatus shown in Fig. 3;
Fig. 7 shows one example of a temperature profile of an object to be heated; and
Fig. 8 is an explanatory drawing that shows a conventional heating furnace and a furnace temperature distribution thereof.

### DETAILED DESCRIPTION OF THE INVENTION

A heating treatment method of the present invention comprises the steps of: preparing an array of heating chambers, the heating chambers being respectively provided with heaters and connected in series; transporting an object to be heated from an upstream side toward a downstream side of the array to allow the object to pass through the heating chambers; supplying and discharging a warm air flow to and from each heating chamber, and controlling an amount of each supplied warm air now and an amount of each discharged warm air flow to generate an air flow traveling along a direction in which the object is raised in temperature.

The sum of the amounts of the supplied warm air flows and the sum af the amounts of the discharged warm air flows may be equal to each other and constant.

The heating chamber on the upstream side may be greater than the heating chamber on the downstream side in amount of the supplied air flow, and smaller than the heating chamber on the downstream side in amount of the discharged air flow.

Each warm air flow may be supplied from a warm air supplying source to each of the heating chambers through a first damper, while each warm air flow may be discharged from each of the heating chambers to a discharging device through a second damper, so that each amount of the supplied warm air flow and the discharged warm air flow is controlled by the first and second dampers, respectively.

A heating treatment apparatus of the present invention comprises: an array of heating chambers, the heating chambers being respectively provided with heaters and connected in series; and a transporting unit that transports an object to be heated from an upstream side toward a downstream side of the array to allow the object to pass through the heating chambers; each heating chamber including: an air supplying unit supplying a warm air flow thereto; and an air discharging unit discharging the warm air flow therefrom, wherein an amount of each supplied warm air flow and an amount of each discharged warm air flow are controlled such that an air flow is generated along a direction in which the object is raised in temperature.

The air supplying unit and the air discharging unit may include an air supplying port and an air discharging port, respectively, and the air supplying port may be connected to a warm air supplying source through a first damper, while the air discharging port may be connected to an air discharging device through a second damper, so that an amount of the supplied air and an amount of the discharged air are controlled by the first and second dampers, respectively.

The following description will discuss the present invention by using embodiments shown in the drawings. However, the present invention is not intended to be limited thereby.

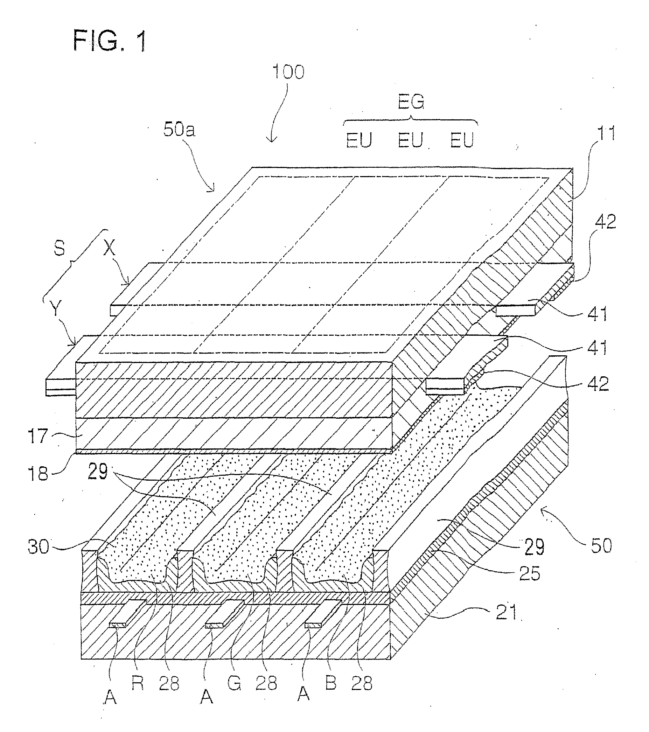

A PDP to which the present invention is applied has a structure in which displaying discharge cells are matrix-arranged between two opposing substrates. More specifically, as shown in Fig. 1, the PDP is constituted by a pair of substrate assemblies, that is, a back substrate assembly 50 and a front substrate assembly 50a. Here, this Figure indicates a pixel (3 cells of RGB).

In the front substrate assembly 50a, electrodes X and Y that extend in a lateral direction so as to generate a surface discharge along the substrate face are arranged on an inner surface of a glass substrate 11 as a pair of display electrodes S that determine display lines. Each of the electrodes X and Y is constituted by a band-shaped transparent electrode 41 having a wide width, made of an ITO thin film, and a band-shaped bus electrode 42 having a narrow width, made of a metal thin film.

The bus electrode 42 is an auxiliary electrode used for ensuring an appropriate conductive property. A dielectric layer 17 is formed in a manner so as to cover the electrodes X and Y. The surface of the dielectric layer 17 is coated with a protective film 18. Both of the dielectric layer 17 and the protective film 18 have a light-transmitting property.

In the back substrate assembly 50, address electrodes A are arranged in a longitudinal direction orthogonal to the electrodes X and Y on the inner face of a glass substrate 21 on the back side, and a dielectric layer 25 is formed so as to cover address electrodes A. Ribs (partition walls) 29 having a linear shape (or a lattice shape) are placed on the dielectric layer 25 one by one between the respective address electrodes A.

In the back substrate assembly 50, discharging spaces (discharging cells) 30 are defined by these ribs 29 to form sub-pixels (unit light-emitting area) EU, and a gap dimension of the discharging space 30 is consequently determined.

Moreover, phosphor layers 28 having three colors of R, G and B used for color display are formed so as to cover the wall face on the back side including the upper portion of the dielectric layer 25 and the side faces of the ribs 29.

Each of the ribs 29 is made from low-melting point glass, and is opaque to ultraviolet rays. With respect to the forming method of the ribs 29, as will be described later, processes are used in which an etching mask is formed, on a low-melting-point glass layer like a solid film through photolithography and this is patterned by using a sand blasting process.

The display electrodes S corresponds to one row in the matrix display, and one address electrode A corresponds to one column, Moreover, three columns correspond to one pixel (pixel element) EG. In other words, one pixel is constituted by three sub-pixels EU of R, G and B, which are aligned in the row direction.

A wall charge in the dielectric layer 17, used for selecting cells to be displayed, is formed by an opposing discharge (address discharge) between the address electrode A and the electrode Y. Upon alternately applying pulses to the electrodes X and Y, a displaying surface discharge (main discharge) is generated in the sub-pixel EU having the wall charge formed therein by the address discharge.

The phosphor layer 28 is locally excited by ultraviolet rays generated by the surface discharge to emit visible lights having a predetermined color. Among the visible lights, those lights that are transmitted through the glass substrate 11 form display light. Since the arranged pattern of the ribs 29 is a so-called stripe pattern, portions inside the discharging space 30, which correspond to the respective column, are connected to one another in the column direction over the entire lines. The sub-pixels EU inside each column have the same light-emission color.

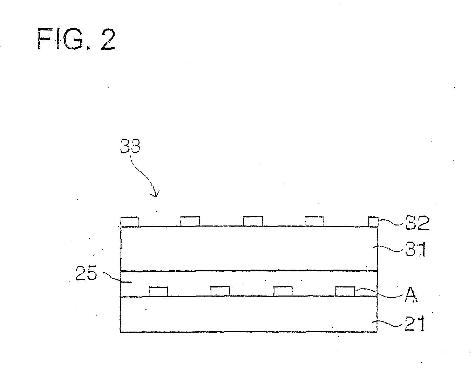

The following description will discuss forming processes of the partition walls (ribs) 29 in the PDP of this type.
(1) First, as shown in Fig. 2, a partition-wall forming paste is applied onto the substrate 21 on which the address electrodes A and the dielectric layer 25 covering the electrodes A are formed, and dried to form a partition-wall forming material layer 31.
(2) Next, after a photosensitive resist layer having a sandblast resistant property has been formed on the partition-wall forming material layer 31, active light rays are selectively applied thereto through a photomask, and by developing this, a mask 32 for sandblast, which, has an opening pattern corresponding to the partition walls, is formed.
(3) Thereafter, a substrate 33 to be processed on which the partition-wall forming material layer 31 and the mask 32 for sandblast have been formed is subjected to a sandblasting process. By the grinding function of the sandblasting process, the partition-wall forming material layer 31 is removed except for portions below the mask 32.
(4) Next, the mask 32 is removed so that the material layer 31 corresponding to the partition walls is exposed and calcined.

The partition walls (ribs) 29 are formed through the above-mentioned processes (1) to (4).

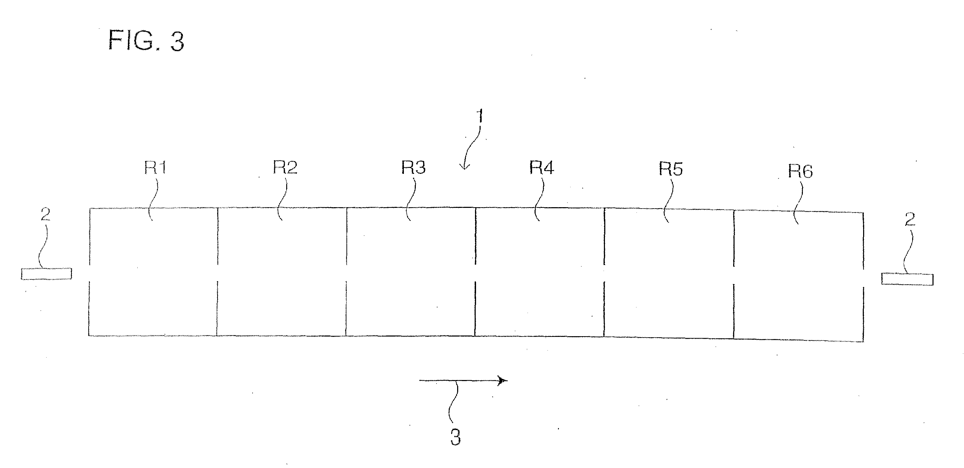

Next, referring to Figs. 3 to 7, the following description will discuss drying processes of the partition-wall forming paste in the above-mentioned process (1).

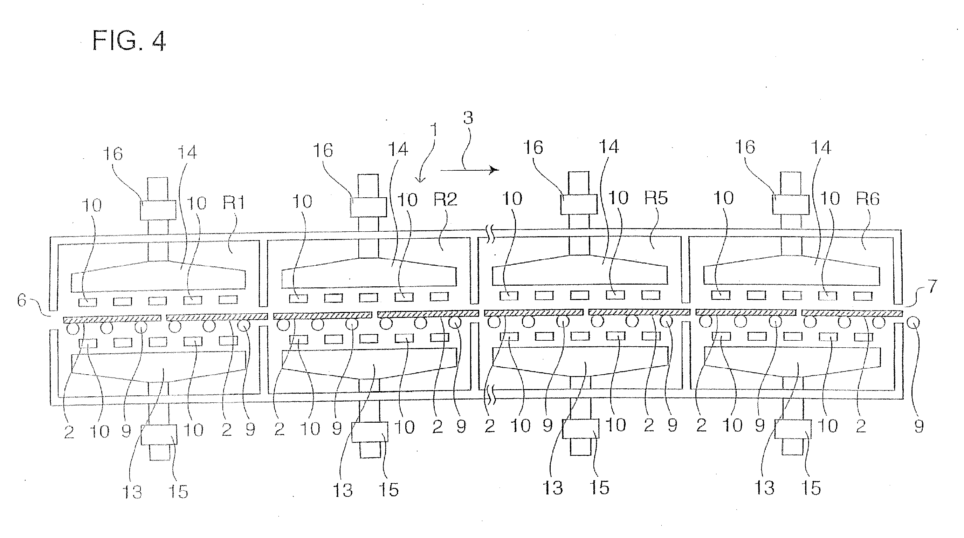

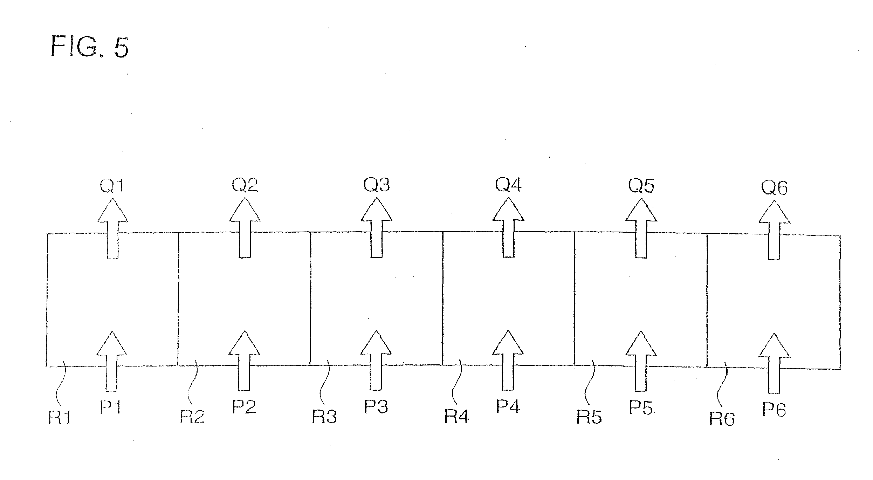

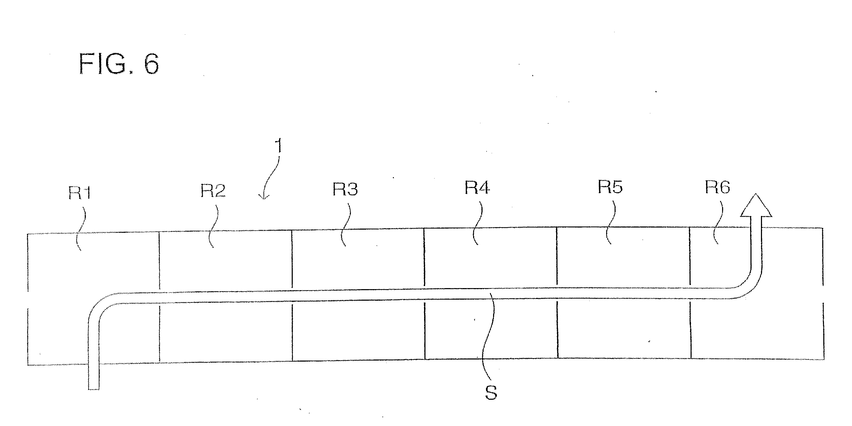

Fig. 3 is a drawing that shows a principle structure of a heating treatment apparatus in accordance with the present invention. Fig. 4 is a n enlarged drawing of an essential portion of Fig. 3. Fig. 5 shows a state in which a warm air flow is introduced into the apparatus shown in Fig. 3. Fig. 6 shows a flow of a gas generated inside the apparatus shown in Fig. 3.

As shown in Fig. 3, a heating treatment apparatus 1 is provided with a plurality of heating chambers R1 to R6 that are respectively provided with heaters, and the heating treatment is applied to an object 2 to be heated, while it is being transported from an upstream side toward a downstream side through the heating chambers R1 to R6, that is, in a direction indicated by arrow 3.

As shown in Fig. 4, the heating treatment apparatus 1 is provided with a plurality of transporting rollers 9 serving as a transporting unit that transports the object 2 brought therein through an inlet port 6 up to an outlet port 7 by allowing it to pass through the heating chambers R1 to R6 in a direction indicated by arrow 3, and a plurality of heaters 10 serving as a heating unit that heats the object 2 from above as well as from below, while it is being transported.

Each of the heating chambers R1 to R6 is provided with a gas-supply port 13 formed at its lower portion and a gas-discharging port 14 formed at its upper portion. Each of the gas-supply ports 13 is connected to a warm air supplying source, not shown, through a damper 15, and each of the gas-discharging port 14 is connected to a gas-discharging device, not shown, through a damper 16.

In each of the heating chambers R1 to R6, there is a capacity in a range, from 0.1 to 10 m³, and the heaters 10 include upper and lower infrared-ray heaters having a total output in a range of 50 to 3000 kW.

For example, the object 2 has a structure in which onto a glass substrate 21 having a size of 100 to 3000 mm (width) x 100 to 2000 mm (length) x 0.3 to 40 mm (thickness) the address electrodes A and the dielectric layer 25 covering the electrodes A have been formed as shown in Fig. 2 and a mixture containing 77 % by weight of glass flit powder, 21 % by weight of a solvent (a mixture of butyl carbitol and butyl carbitol acetate) and 2 % by weight of a binder (ethyl cellulose) is applied as the partition-wall forming paste with a thickness in a range from 10 to 500µm.

In the heating treatment apparatus 1, drying is carried out by evaporating the above-mentioned solvent. Therefore, in the heating treatment apparatus 1, as shown in Fig. 5, warm air flows respectively having flow rates of P1 to P6 are supplied to the heating chambers R 1 to R6, and warm air flows respectively having flow rates of Q1 to Q6 are discharged from the heating chambers R1 to R6.

Here, the flow rates P1 to P6 and Q1 to Q6 are respectively controlled by the dampers 15 and 16. Conventionally, these are set to P1 = P2 = P3 = P4 = P5 = P6 = A, as well as to Q1 = Q2 = Q3 = Q4 = Q5 = Q6 = A.

Here, for example, A = 1 to 10 m³/min.

In the present invention, in the heating chambers on the upstream side of the apparatus 1, the supply flow rate is made greater, while the discharge flow rate is made smaller, and in the heating chambers on the downstream side of the apparatus 1, the supply flow rate is made smaller, while the discharge flow rate is made greater.

For example, the supply flow rates P1 and P2 to the heating chambers R1 and R2 are set to P1 = P2 = 1.2A, while the supply flow rates P3 to P6 to the heating chambers R3 to R6 are set to P3 = P4 = P5 = P6 = 0.9A.

Moreover, the discharge flow rates Q1 and Q2 from the heating chambers R1 and R2 are set to Q1 = Q2 = 0.6A, while the discharge flow rates Q3 to Q6 from heating chambers R3 to R6 are set to Q3 = Q4 = Q5 = Q6 = 1.2A.

Here, P1 + P2 + P3 + P4 + P5 + P6 = Q1 + Q2 + Q3 + Q4 + Q5 + Q6 = 6A, which is a constant value.

With this arrangement, as shown in Fig. 6, a warm air flow S, which is allowed to flow from the heating chamber R1 toward the heating chamber R6 by passing through the heating chambers R2 to R5, is generated. Therefore, when the warm air temperature in the warm-air supplying source is set to an appropriate temperature (for example, 100°C), the evaporation of the solvent on the rear end side with respect to the transporting direction of the object 2 having partition-wall forming paste layer is accelerated by a function of thermal energy and kinetic energy of the warm air flow S. As a result, the evaporation rates of the solvent between the front end side and the rear end side of the object 2 reach the same level so that drying irregularities of the object 2 are prevented.

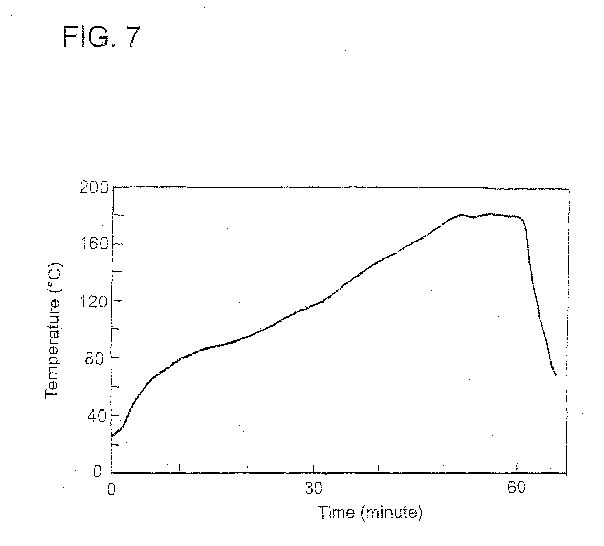

Fig. 7 shows one example of a temperature profile in the center of the object 2, which is transported horizontally at a constant velocity from the heating chamber R1 to the heating chamber R6 during 60 minutes as shown, in Fig. 2.

As shown in Fig. 7, the temperature of the object 2 brought into the heating chamber R1 is raised from normal temperature at a virtually constant temperature gradient and reaches 180°C in the heating chamber R6 after 60 minutes. This shows that the warm air flow S, shown in Fig. 6, is generated in a direction of the temperature gradient of the object 2, that is, in a direction in which the temperature of the object 2 is raised.

Moreover, the solvent contained in the partition-wall forming paste of the object 2 is evaporated in a temperature range of 100 to 140°C. Therefore, the temperature profile of Fig. 7 indicates that the solvent is evaporated in the heating chambers R3 and R4.

## Claims

1. A heating treatment method comprising the steps of:
preparing an array of heating chambers, the heating chambers being respectively provided with heaters and connected in series;
transporting an object to be heated from an upstream side toward a downstream side of the array to allow the object to pass through the heating chambers;
supplying and discharging a warm air flow to and from each heating chamber, and
controlling an amount of each supplied warm air flow and an amount of each discharged warm air flow to generate an air flow traveling along a direction in which the object is raised in temperature.

2. The heating treatment method according to claim 1, wherein the sum of the amounts of the supplied warm air flows and the sum of the amounts of the discharged warm air flows are equal to each other and constant.

3. The heating treatment method according to claim, 1 or 2, wherein the heating chamber on the upstream side is greater than the heating chamber on the downstream side in amount of the supplied air flow, and smaller than the heating chamber on the downstream side in amount of the discharged air flow.

4. The heating treatment method according to any of the preceding claims, wherein each warm air flow is supplied from a warm air supplying source to each of the heating chambers through a first damper, while each warm air flow is discharged from each of the heating chambers to a discharging device through a second damper, so that each amount of the supplied warm air flow and the discharged warm air flow is controlled by the first and second dampers, respectively.

5. A heating treatment apparatus comprising:
an array of heating chambers, the heating chambers being respectively provided with heaters and connected in series; and
a transporting unit that transports an object to be heated from an upstream side toward a downstream side of the array to allow the object to pass through the heating chambers;
each heating chamber including:
an air supplying unit supplying a warm air flow thereto; and
an air discharging unit discharging the warm air flow therefrom,
wherein an amount of each supplied warm air flow and an amount of each discharged warm air flow are controlled such that an air flow is generated along a direction in which the object is raised in temperature.

6. The heating treatment apparatus according to claim 5, wherein the sum of the amounts of the supplied warm air flows and the sum of the amounts of the discharged warm air flows are equal to each other and constant.

7. The heating treatment apparatus according to claim 5 or 6, wherein the heating chamber on the upstream side is greater than the heating chamber on the downstream side in amount of the supplied air flow, and smaller than the heating chamber on the downstream side in amount of the discharged air flow.

8. The heating treatment apparatus according to any of the preceding claims, wherein the air supplying unit and the air discharging unit include an air supplying port and an air discharging port, respectively, and the air supplying port is connected to a warm air supplying source through a first damper, while the air discharging port is connected to an air discharging device through a second damper, so that an amount of the supplied air and an amount of the discharged air are controlled by the first and second dampers, respectively.
